# FASCICULE DE BREVET EUROPEEN

(11) **EP 2 855 086 B1**
(45) Date de publication et mention de la délivrance du brevet: **14.09.2016**
(21) Numéro de dépôt: 13730016.6
(22) Date de dépôt: 31.05.2013
(51) Int. Cl.: B25B 7/12, B25B 25/00, F16C 1/14, F16C 1/10

(54) **TELEMANIPULATEUR A CABLE UNIVERSEL**
REMOTE-MANIPULATOR MIT EINEM UNIVERSALKABEL
REMOTE MANIPULATOR WITH A UNIVERSAL CABLE

(30) Priorité: 01.06.2012 FR 1255071
(43) Date de publication de la demande: 08.04.2015
(73) Titulaire: Gillet Group, 52800 Nogent (FR)
(72) Inventeur: GILLET, Pascal, F-52800 Nogent (FR); PETIT, Fabrice, F-52250 Orcevaux (FR)
(74) Mandataire: Oudin, Stéphane
(86) Numéro de dépôt international: PCT/FR2013/051240
(87) Numéro de publication internationale: WO 2013/178964

(56) Documents cités:
- DE-A1- 10 027 694
- DE-U1- 29 515 050
- US-B1- 6 276 236
- US-B1- 6 622 588

## Description

### Domaine technique

La présente invention concerne un télémanipulateur à câble comprenant un mors fixe et un mors mobile susceptible de se déplacer linéairement par rapport au mors fixe par des moyens d'actionnement situés à distance, particulièrement utile au montage et au démontage de colliers élastiques à bande largement utilisés dans le domaine de l'automobile, par exemple pour la fixation des durites sur des canalisations de refroidissement subissant de larges variations de leur diamètre extérieur, en raison de fortes dilatations.

### Technique antérieure

Il est depuis longtemps connu que pour maintenir des liaisons étanches entre durite et canalisation, il n'est pas possible d'utiliser par exemple des colliers rigides à vis, d'où l'intérêt des colliers de serrage élastiques appelés par la suite colliers élastiques. De tels colliers sont classiquement fabriqués à partir d'une bande de feuillard mise en forme selon une bague généralement circulaire. Ladite bague est naturellement susceptible de se déformer par écartement de ses deux extrémités qui créé un couple de rappel élastique utilisé comme serrage.

On sait égalementque pour réaliser ce type de collier, on fait se chevaucher les deux extrémités d'une bande ressort. Lesdites deux extrémités sont munies d'une oreille d'entraînementrectangulaire obtenue par simple pliage de leurs parties extrêmes vers l'extérieur du collier. Ainsi, à l'aide d'une pince munie de mors, on peut aisément rapprocher les deux oreilles d'entraînement afin d'agrandir le diamètre du collier provoquant lorsqu'on relâche le couple de rappel élastique nécessaire au serrage.

De nombreux outillages pour le montage et le démontage des colliers élastiques sont à la disposition des utilisateurs, et la plupart de ces outillages, manuels ou automatiques fonctionnent sur des systèmes à levier très simples comme par exemple des pinces en X.

Ainsi, on connaît déjà un système de télémanipulation d'un outillage divulgué dans la demande de brevet EP 0 946 337. Ledit système de télémanipulation comprend un mors fixe et un mors mobile susceptible de se déplacer linéairement par rapport au mors fixegrâce à des moyens d'actionnement situés à distance et couplés audit outillage par l'intermédiaire d'un câble relié d'un côté au mors mobile et coulissant à l'intérieur d'une gaine avantageusement souple dont une extrémité vient en butée sur le mors fixe pour laisser coulisser le câble. Ce système de télémanipulation est tel que ses moyens d'actionnement consistent en deux bras qui sont articulés sur un même axe de telle façon qu'ils s'écartent angulairement d'une valeur telle que la distance entre leur extrémité libre soit au moins égale au déplacement linéaire maximum du mors mobile, lorsque l'on rapproche l'un vers l'autre deux manches respectivement solidaires des deux bras, l'extrémité libre d'un des bras servant de butée à l'autre extrémité de la gaine tout en laissant coulisser librement le câble qui le traverse et qui est relié à l'extrémité libre de l'autre bras.

L'inconvénient majeur de ce type d'outillage pour colliers élastiques réside dans le fait que le montage et l'entretien de l'ensemble gaine-câble sont délicats et compliqués. En effet, avec ce type d'outillage, le câble qui traverse l'un des bras puis est fixé à l'extrémité libre de l'autre bras, ne permet pas un remplacement rapide et fiable du câble et/ou de la gaine lorsqu'ils sont endommagés.De plus, cette configuration ne permet pas non plus de commercialiser des ensembles gaine-câble préfabriqués facilement interchangeables, car il faut avec ce type d'outillage intervenir sur le câble pour mettre en place l'ensemble gaine-câble sur ledit outillage.

### Exposé de l'invention

Ainsi, le but de la présente invention est de proposer une alternative aux systèmes de télémanipulation d'un outillage déjà connus qui est plus facile et donc moins onéreuse à fabriquer et qui permet une préfabrication de l'ensemble gaine-câble assurant une mise en place et une maintenance dudit ensemble plus aisée.

A cet effet, la présente invention a pour objet un télémanipulateur d'un outillage comprenant un corps muni d'un mors fixe et un coulisseau muni d'un mors mobile susceptible de se déplacer linéairement par rapport au corps, ledit télémanipulateur comportant des moyens d'actionnement situés à distance et couplés audit outillage par l'intermédiaire d'un câble solidaire d'un côté d'un moyen de fixation du coulisseau et coulissant à l'intérieur d'une gaine souple dont une extrémité est solidaire d'un moyen de fixation du corps de manière à laisser coulisser le câble, les moyens d'actionnement comprenant deux bras associés chacun respectivement à un manche et susceptibles de s'écarter angulairement l'un de l'autre par rotation autour d'un axe d'une valeur telle que la distance entre leur extrémité libre soit au moins égale au déplacement linéaire maximum du coulisseau portant le mors mobile, lorsque l'on rapproche l'un vers l'autre lesdits deux manches. Ledit télémanipulateur est remarquable en ce que chacun des bras est tel que son extrémité libre permet le clipsage indifféremment de l'autre extrémité du câble ou de l'autre extrémité de la gaine, la gaine étant clipsée de manière à laisser coulisser le câble.

Selon un mode de réalisation préféré, chacun des bras reçoit à son extrémité libre de façon interchangeable respectivement un manchon permettant le clipsage indifféremment de l'autre extrémité du câble ou de l'autre extrémité de la gaine, la gaine étant clipsée de manière à laisser coulisser le câble.

Chaque manchon comprend deux branches élastiquement déformables, sensiblement parallèles entre elles et déterminant entre elles une première fente comportant du coté de l'extrémité libre desdites deux branches une section plus large, et une deuxième fente transversale sensiblement perpendiculaire à ladite première fente, débouchant avantageusement de part et d'autre du manchon, les premières fentes étant telles que leur plan longitudinal médian est sensiblement perpendiculaire à l'axe de rotation desdits bras.

De manière préférée, le moyen de fixation du corps est semblable aux manchons et comporte deux branches sensiblement parallèles entre elles déterminant entre elles une première fente comportant du coté de l'extrémité libre desdites deux branches une section plus large, et une deuxième fente transversale sensiblement perpendiculaire respectivement à la première fente, débouchant avantageusement de part et d'autre du moyen de fixation.

De même, le moyen de fixation du coulisseau est de préférence semblable au moyen de fixation du corps et comporte deux branches sensiblement parallèles entre elles déterminant entre elles une première fente comportant du coté de l'extrémité libre desdites deux branches une section plus large, et une deuxième fente transversale sensiblement perpendiculaire respectivement à la première fente, débouchant avantageusement de part et d'autre du moyen de fixation.

Selon un mode de réalisation préféré, les deuxième fente et sections des moyens de fixation respectifs des corps et coulisseau de l'outillage sont de préférence identiques.

Selon un mode de réalisation encore plus avantageux, les deuxième fente et section des moyens de fixation respectifs des corps et coulisseau de l'outillage sont identiques aux deuxième fente et sections respectives des manchons.

Avantageusement, le câble est muni à chacune de ses extrémités d'un embout comprenant un corps de forme cylindrique et d'une collerette disposée autour dudit corpset s'étendant perpendiculairement à l'axe longitudinal du corps.

De même, la gaine est de préférence munie à chacune de ses extrémités d'un embout, comprenant un corps tubulaire de forme cylindrique et d'une collerettedisposée autour dudit corps et s'étendant perpendiculairement à l'axe longitudinal du corps.

Chaque manchon est encliqueté sur le bras associé et comporte au moins une languette élastiquement déformable apte à coopérer avec un ergot du bras associé.

Selon un mode de réalisation préféré, les éléments métalliques constitutifs du télémanipulateur sont découpés dans du feuillard, puis pliés ou emboutis.

### Description sommaire des figures

D'autres avantages et caractéristiques ressortiront mieux de la description qui va suivre d'une variante d'exécution d'un télémanipulateur d'outillageselon l'invention en référence aux figures annexées sur lesquelles :
- la figure 1 est une vue de perspective d'un télémanipulateur d'un outillage selon l'invention ;
- la figure 2 est une vue de détail partielle en perspective de l'extrémité des bras du télémanipulateurde la figure 1 ;
- la figure 3 est une vue de détail partielle en perspective d'une des extrémités d'un ensemble câble-gaine du télémanipulateur de la figure 1 ;
- la figure 4 est une vue de détail partielle en perspective de l'outillage du télémanipulateur de la figure 1, en position mords ouverts ;
- la figure 5 est une vue en perspective d'une variante d'un télémanipulateur d'un outillage selon l'invention.

### Meilleure manière de réaliser l'invention technique

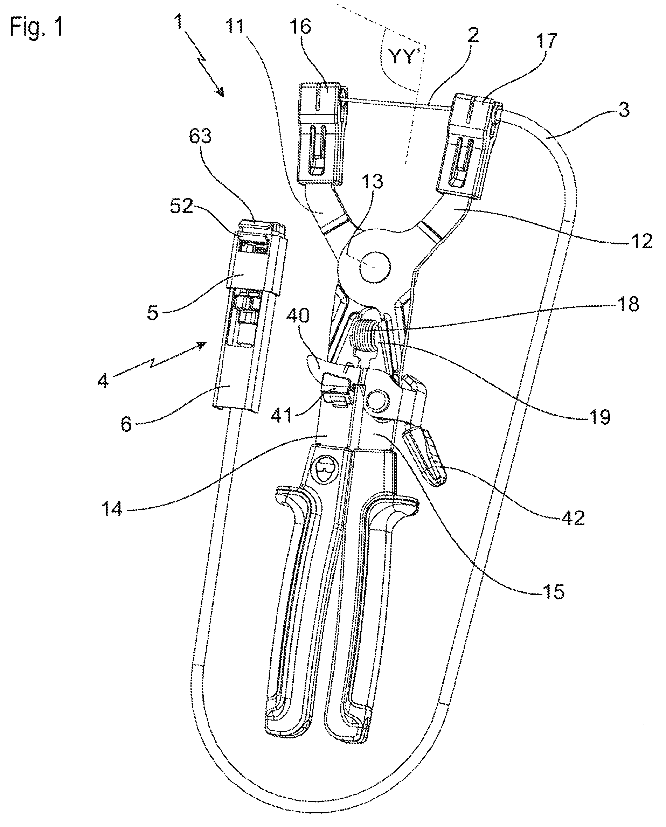

En référence aux figures 1 à 3, le télémanipulateur 1 selon l'invention comporte des moyens d'actionnement reliés par un ensemble comprenant un câble 2 à l'intérieur d'une gaine 3, à un outillage 4 permettant d'agir sur les oreilles d'entraînement d'un collier élastique (non représenté sur les figures) en vue de son montage ou démontage par exemple sur une durite de canalisation.

Le câble 2 est muni à chacune de ses extrémités d'un embout 21 avantageusement serti comprenant un corps 22 de forme cylindrique et d'une collerette 23 disposée autour dudit corps 22 et s'étendant perpendiculairement à l'axe longitudinal du corps 22 et sensiblement au voisinage de son plan transversal médian.

La gaine 3 est également munie à chacune de ses extrémités d'un embout 31 avantageusement serti, semblable aux embouts 21 du câble 2, comprenant un corps 32 de forme cylindrique et d'une collerette 33 disposée autour dudit corps 32 et s'étendant perpendiculairement à l'axe longitudinal du corps 32 et sensiblement au voisinage de son plan transversal médian. Le corps 32 est tubulaire afin de permettre le passage et le coulissement du câble 2 à l'intérieur de la gaine 3.

Les corps 22,32des embouts 21,31 respectifs du câble 2 et de la gaine 3 sont avantageusement de forme cylindrique de révolution et de même diamètre.

De même, les collerettes 23,33 des embouts 21,31 respectifs du câble 2 et de la gaine 3 sont de préférence de mêmes dimensions.

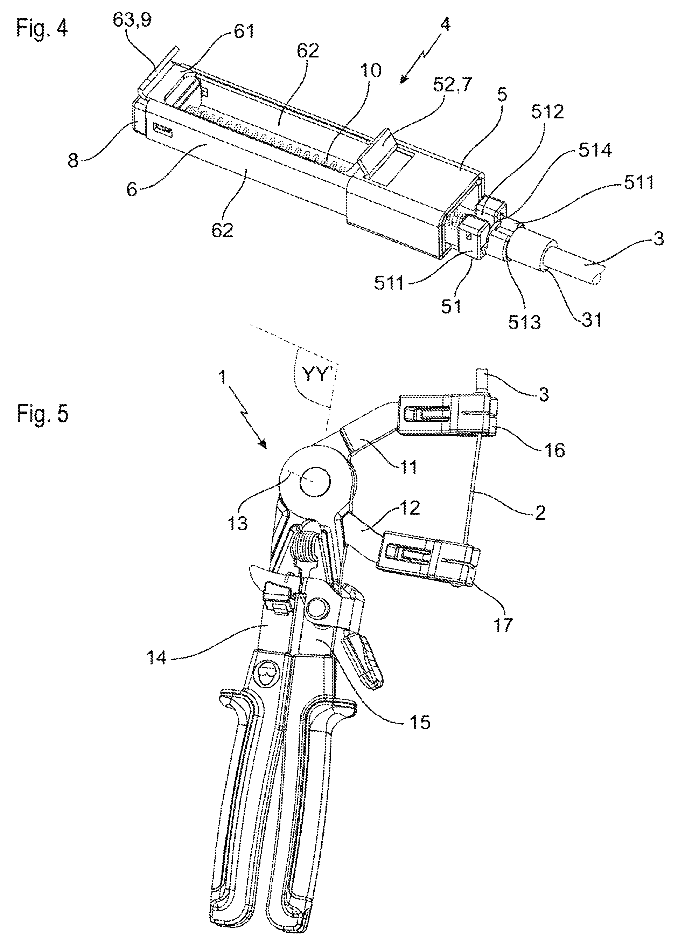

Conformément à la figure 4, l'outillage 4 pour le serrage desserrage du colliercomprend pour l'essentiel un corps 5de forme globalement tubulaire et un coulisseau 6 de section transversale en forme générale de Ucomportant une âme 61 et deux ailes 62 s'étendant perpendiculairement des bords longitudinaux de ladite âme 61, ledit coulisseau 6 étant apte à coulisser à l'intérieur dudit corps 5 le long de l'axe longitudinal de ce dernier.

Le corps 5comporte un moyen de fixation rapide 51 apte, d'une part, à recevoir de façon réversible, par exemple par clipsage, une des extrémités de la gaine 3 et, d'autre part, à laisser passer le câble 2 pour que l'extrémité de ce dernier puisse être solidarisée de façon réversible, à l'extrémité libre du coulisseau 6. Le corps 5 comporte également une languette 52 issue de la face longitudinale du corps 5 située du coté de l'âme 61 du coulisseau 6 et s'étendant vers l'extérieur dudit corps 5, ladite languette 52 étant obtenue avantageusement par découpe puis pliage et faisant office avec le corps 5de mors fixe 7.

Le coulisseau 6 comprend un bloc 8 disposé entre lesdites âme 61 et ailes 62 et fixé de l'extrémité libre dudit coulisseau 6. Le bloc 8 comporte un moyen de fixation rapide (non représenté sur les figures), semblable au moyen de fixation rapide 51 du corps 5, apte à recevoir, de façon réversible, une des extrémités du câble 2. L'âme 61 du coulisseau 6 comporte une languette 63 semblable à la languette 52 du corps 5, issue du bord latéral de l'âme 61 disposé au droit du bloc 8 et s'étendant dans la direction opposée des ailes 62, ladite languette 63 étant obtenue avantageusement par pliage et faisant office de mors mobile 9.

Les languettes 52,63 respectives du corps 5 et du coulisseau 6 sont inclinées l'une vers l'autre par rapport à un plan perpendiculaire à l'âme 61 du coulisseau 6, de manière à former avec ladite âme 61 un logement en forme globale de queue d'aronde. Ainsi, les oreilles d'entraînement d'un collier élastique pourront être en appui sur les faces en regard des languettes 52,63 respectives du corps 5 et du coulisseau 6 sans risquer au moment du serrage un déboîtement intempestif dudit collier.

L'outillage 4 comprend en outre un ressort 10 de traction disposé à l'intérieur du corps 5, reliant le bloc 8 du coulisseau 6 et le corps 5 et tendant à resserrer lesdits bloc 8 et corps 5 afin de faciliter le desserrage du collier lorsque le mors mobile 9 se rapproche du mors fixe 7.

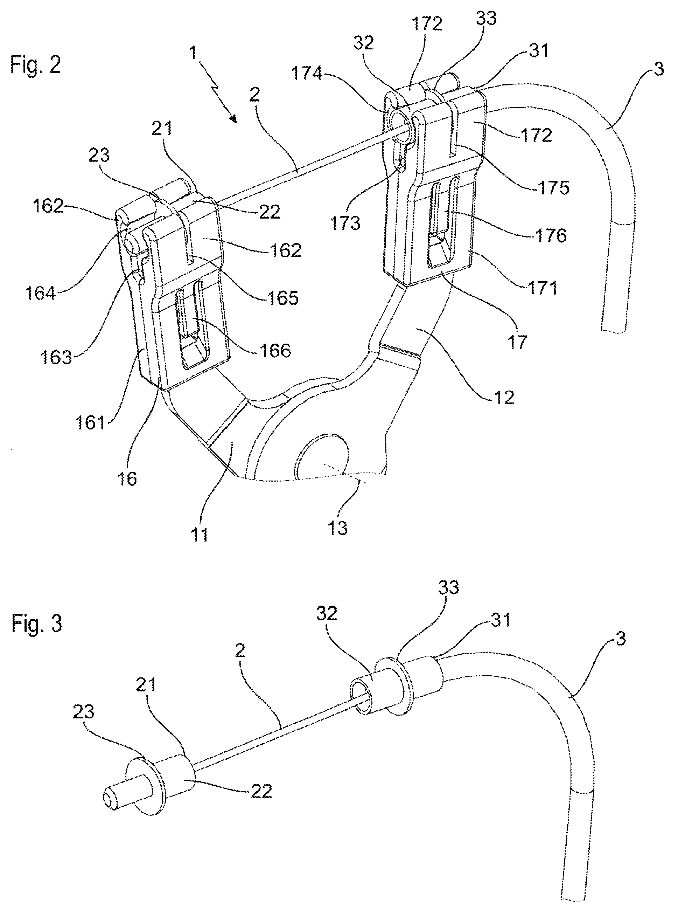

En référence aux figures 1 et 2, les moyens d'actionnement du télémanipulateur 1 sont pour l'essentiel constitués par deux bras 11,12 susceptibles de s'écarter l'un de l'autre par rotation autour d'un axe 13. Chaque bras 11,12 est associé à un manche, respectivement 14,15, selon une disposition particulière faisant correspondre chaque bras au manche situé du même côté du planYY' contenant la ligne médiane des manches 14,15 et l'axe 13 de rotation des deux bras 11,12. Ainsi, avec une telle configuration et conformément à la figure 1, il résulte que lorsqu'on rapproche les deux manches 14,15 par rotation autour de l'axe 13 on écarte les bras 11,12, et à l'inverse, lorsqu'on écarte les deux manches 14,15 l'un de l'autre, on tend à rapprocher les deux bras 11,12. En outre, le télémanipulateur 1 a globalement une forme de X et est sensiblement symétrique par rapport audit plan YY'.

Accessoirement, deux poignées ergonomiques sont fixées à cheval sur les deux extrémités des supports de manches 14,15 pour procurer une meilleure préhension de l'outil.

L'extrémité libre de chacun des deux bras 11,12 comporte un manchon, respectivement 16,17,solidairede façon interchangeable par tout moyen approprié tel que, par exemple, l'encliquetage, le montage à force ou encore le boulonnage. Chaque manchon 16,17 a une section transversale en forme générale de Y et comprend une âme 161,171 tubulaire apte à s'emmancher sur l'extrémité libre du bras 11,12 associé, et de deux branches 162,172élastiquement déformables, sensiblement parallèles entre elles et issues d'une des extrémités de ladite âme 161,171. Les deux branches 162,172 déterminent entre elles une première fente, respectivement 163,173, comportant du coté de l'extrémité libre desdites deux branches 162,172 une section, respectivement 164,174, plus large apte à coopérer avec les corps 22,32des embouts 21,31 respectifs du câble 2 et de la gaine 3 pour maintenir lesdits corps 22,32 serrés entre lesdites deux branches 162,172. Les premières fentes 163,173 sont telles que leur plan longitudinal médian soit sensiblement perpendiculaire à l'axe 13 de rotation des bras 11,12.

L'homme du métier n'aura aucune difficulté pour choisir la matière utilisée pour réaliser les manchons 16,17 et déterminer les dimensions et les caractéristiques mécaniques appropriées pour que les deux branches 162,172 soient suffisamment élastiques et résistantes pour, d'une part, permettre leur écartement pour laisser passer les corps 22,32 jusqu'aux sections 164,174 et, d'autre part, assurer le maintien desdits corps 22,32 entre lesdites deux branches 162,172.

Afin empêcher le coulissement entre les deux branches 162,172 des corps 22,32 le long de leur axe longitudinal, les deux branches 162,172 comportent une deuxième fente, respectivement 165,175, transversale sensiblement perpendiculaire respectivement à la première fente 163,173, débouchant avantageusement de part et d'autre du manchon 16,17 respectif et apte à coopérer avec l'une des collerettes 23,33 des embouts 21,31 respectifs du câble 2 et de la gaine 3.

Ainsi, on comprend bien qu'avec une telle configuration, il est très aisé de mettre en place et de retirer les embouts 21,31 respectifs du câble 2 et de la gaine 3 des bras 11,12 du télémanipulateur 1 selon l'invention facilitant la maintenance lorsque, par exemple le câble est endommagé.

Par ailleurs, l'embout 21 du câble 2 est clipsé dans le manchon 16 du bras 11 et l'embout 31 de la gaine 3 est clipsé dans le manchon 17 du bras 12, ou inversement.

De plus, l'autre embout 21 du câble 2 est clipsé dans le moyen de fixation du coulisseau 6 de l'outillage 4 et l'autre embout 31 de la gaine 3 est clipsé dans le moyen de fixation 51 du corps 5 de l'outillage 4.

Le moyen de fixation 51 du corps 5 de l'outillage 4 est semblable aux manchons 16,17 associés aux bras 11,12. Ainsi, ledit moyen de fixation 51 du corps 5 comporte deux branches 511 sensiblement parallèles entre elles déterminant entre elles une première fente 512 comportant du coté de l'extrémité libre desdites deux branches 511 une section 513 plus large apte à coopérer avec le corps 32 de l'embout 31 associé de la gaine 3 pour maintenir ledit corps 32 serré entre lesdites deux branches 511. De plus, afin empêcher le coulissement entre les deux branches 511 du corps 32 le long de son axe longitudinal, les deux branches 511 comportent une deuxième fente 514 transversale sensiblement perpendiculaire respectivement à la première fente 512, débouchant avantageusement de part et d'autre du moyen de fixation 51 et apte à coopérer avec la collerette 33 de l'embout 31 associé de la gaine 3.

Le moyen de fixation (non représenté sur les figures) du coulisseau 6 de l'outillage 4 est semblable au moyen de fixation 51 du corps précédemment décrit et comporte deux branches sensiblement parallèles entre elles déterminant entre elles une première fente comportant du coté de l'extrémité libre desdites deux branches une section plus large apte à coopérer avec le corps 22 de l'embout 21 associé du câble 2 pour maintenir ledit corps 22 serré entre lesdites deux branches. De plus, afin d'empêcher le coulissement entre les deux branches du corps 22 le long de son axe longitudinal, les deux branches comportent une deuxième fente transversale sensiblement perpendiculaire respectivement à la première fente, débouchant avantageusement de part et d'autre du moyen de fixation et apte à coopérer avec la collerette 23 de l'embout 21 associé du câble 2.

Les deuxième fente 514 et sections 513 des moyens de fixation 51 respectifs des corps 5 et coulisseau 6 de l'outillage 4 sont de préférence identiques et encore plus avantageusement identiques aux deuxième fente 165,175 et sections 164,174 respectives des manchons 16,17. En effet, avec cette dernière configuration, l'un des embouts 21 du câble 2 pourra être indifféremment clipsé sur le coulisseau 6 ou sur l'un des manchons 16,17. De même, l'un des embouts 1 de la gaine 3 pourra être indifféremment clipsé sur le corps 5 ou sur l'un des manchons 16,17. On comprend bine que cette configuration préférentielle facilite la maintenance puisque les câble 2 et gaine 3 peuvent être montés sur le télémanipulateur 1 sans respecter un sens particulier.

Ainsi, la rotation des deux bras 11,12 du télémanipulateur 1 autour de l'axe 13 provoque l'écartement ou le resserrement des extrémités libres des manchons 16,17, mais également le déplacement linéaire du mors mobile 9 du coulisseau 6 par rapport au mors fixe 7 du corps 5, qui est naturellement obtenu par traction ou poussée sur le câble 2 coulissant à l'intérieur de la gaine 3.

L'Homme du Métier n'aura aucune difficulté pour dimensionner les deux bras 11,12 du télémanipulateur 1 et leur manchon 16,17 associé afin de déterminer entre leurs deux extrémités lesdits manchons 16,17 un déplacement équivalent à celui du mors mobile 9 en direction et jusqu'au contact avec le mors fixe 7.

On comprend bien que le télémanipulateur 1 est particulièrement intéressant car l'ensemble câble 2-gaine 3 peut être fabriqué entièrement en usine et livrés sur site en vue de son montage sur ledit télémanipulateur 1. En effet, les câble 2 et gaine 3 peuvent être d'abord coupés à longueur et munis de leurs embouts 21,31 sertis en usine, puis expédiés chez un utilisateur où lesdits embouts 21,31 seront simplement clipsés sur les manchons 16,17 du télémanipulateur 1 et l'outillage 4.

En outre, en cas d'endommagement, les manchons 16,17 pourront être également facilement interchangés. Ainsi, selon un mode de réalisation préféré, lesdits manchons 16,17 sont encliquetés sur les bras 11,12 et comportent chacun au moins une languette 166,176 élastiquement déformable apte à coopérer avec un ergot (non représenté sur les figures) du bras 11,12 associé pour maintenir en position les manchons 16,17 sur les bras 11,12.

On comprend bien que le télémanipulateur 1 selon l'invention pourra être dépourvu de manchons 16,17 interchangeables. Dans ce cas, l'extrémité libre de chacun des bras 11,12 sera agencée pour permettre le clipsage indifféremment d'une des extrémités du câble 2 ou d'une des extrémités de la gaine 3. Pour cela, chaque extrémité devra comprendre, par exemple, deux branches déterminant une première fente munie d'une section plus large, et comportant une deuxième fente. Toutefois, cette configuration est particulièrement onéreuse car elle nécessite des usinages des bras 11,12, et ne permet pas une maintenance aisée si l'une des branches est endommagée.

Selon des dispositions accessoires du télémanipulateur 1, il est prévu de disposer entre les deux manches 14,15 et à proximité de leur articulation 13, un ressort de rappel 18 tendant à écarter au repos lesdits manches 14,15, c'est-à-dire à écarter le mors mobile 9 du mords fixe 7 à l'extrémité de la chape 7 de l'outillage 4.

Le ressort 18 est un simple ressort hélicoïdal bloqué entre deux bossages 19 prévus sur la tranche des manches 14,15.

De la même manière, il est avantageusement prévu un mécanisme à cliquet, monté par exemple sur le manche 15, de telle manière que son crochet d'extrémité 40 vienne coopérer avec un ergot 41 prévu sur l'autre manche 14 pour maintenir l'un contre l'autre les deux manches lorsque ceux-ci sont rapprochés, c'est-à-dire lorsque le mors mobile 9 est amené à proximité du mors fixe 7 ; naturellement, un dispositif manuel 42 permet de désengager le crochet d'extrémité 20 de l'ergot 21 à tout moment, et ainsi libérer les deux manches 14,15 et par là, toute traction sur les oreilles d'entraînement dégageant le collier élastique.

Selon une construction particulièrement avantageuse du télémanipulateur 1, en référence notamment aux figures 1 et 4, les éléments métalliques constitutifsdu télémanipulateur 1 sont découpés dans du feuillard d'épaisseur 5 mm par exemple, puis pliés ou emboutis. Cette technique de fabrication sans soudure et sans torsion permet de limiter significativement les coûts de fabrication.

### Description d'autres modes de réalisation

Il est possible de réaliser le télémanipulateur 1 conforme à l'invention suivant d'autres configurations.

Ainsi, selon la figure 5, le télémanipulateur 1 n'a plus une forme générale de X mais est tel que les deux bras 11,12 sont inclinés du même côté par rapport au plan YY' précédemment décrit ; naturellement l'angle d'inclinaison entre lesdits bras 11,12 est toujours déterminé pour que l'écartement ou le resserrement des extrémités libres des manchons 16,17 associés aux bras 11,12 correspondent au déplacement linéaire du mors mobile 9 du coulisseau 6 par rapport au mors fixe 7 du corps 5.

### Possibilité d'application industrielle

Comme décrit précédemment, il est bien évident que le télémanipulateur 1 selon l'invention couplé avec son outillage 4 est particulièrement adapté au montage et démontage des colliers à bande élastique. Toutefois, il est toujours possible d'utiliser le télémanipulateur 1 dans tous les cas où il est nécessaire d'actionner linéairement deux mors entre eux et ce, à distance, au moyen d'une gaine souple ; en ce sens, l'application particulière aux colliers élastiques constitue un exemple sans doute important mais en aucun cas, limitatif de la portée de l'invention.

## Revendications

1. Télémanipulateur (1) d'un outillage (4) comprenant un corps (5) muni d'un mors fixe (7) et un coulisseau (6) muni d'un mors mobile (9) susceptible de se déplacer linéairement par rapport au corps (5), ledit télémanipulateur (1) comportant des moyens d'actionnement situés à distance et couplés audit outillage (4) par l'intermédiaire d'un câble (2) solidaire d'un côté d'un moyen de fixation du coulisseau (6) et coulissant à l'intérieur d'une gaine (3) souple dont une extrémité est solidaire d'un moyen de fixation (51) du corps (5) de manière à laisser coulisser le câble (2), les moyens d'actionnement comprenant deux bras (11,12) associés chacun respectivement à un manche (14,15) et susceptibles de s'écarter angulairement l'un de l'autre par rotation autour d'un axe (13) d'une valeur telle que la distance entre leur extrémité libre soit au moins égale au déplacement linéaire maximum du coulisseau (6) portant le mors mobile (9), lorsque l'on rapproche l'un vers l'autre lesdits deux manches (14,15), **caractérisé en ce que** chacun des bras (11,12) reçoit à son extrémité libre de façon interchangeable respectivement un manchon (16,17) permettant le clipsage indifféremment de l'autre extrémité du câble (2) ou de l'autre extrémité de la gaine (3), la gaine (3) étant clipsée de manière à laisser coulisser le câble (2).

2. Télémanipulateur (1) selon la revendication 1 **caractérisé en ce que** chaque manchon (16,17) comprend deux branches (162,172) élastiquement déformables, sensiblement parallèles entre elles et déterminant entre elles une première fente (163,173) comportant du côté de l'extrémité libre desdites deux branches (162,172) une section (164,174) plus large, et une deuxième fente (165,175) transversale sensiblement perpendiculaire à ladite première fente (163,173), débouchant avantageusement de part et d'autre du manchon (16,17), les premières fentes (163,173) étant telles que leur plan longitudinal médian est sensiblement perpendiculaire à l'axe (13) de rotation desdits bras (11,12).

3. Télémanipulateur (1) selon la revendication 2 **caractérisé en ce que** le moyen de fixation (51) du corps (5) est semblable aux manchons (16,17) et comporte deux branches (511) sensiblement parallèles entre elles déterminant entre elles une première fente (512) comportant du côté de l'extrémité libre desdites deux branches (511) une section (513) plus large, et une deuxième fente (514) transversale sensiblement perpendiculaire respectivement à la première fente (512), débouchant avantageusement de part et d'autre du moyen de fixation (51).

4. Télémanipulateur (1) selon la revendication 3 **caractérisé en ce que** le moyen de fixation du coulisseau (6) est semblable au moyen de fixation (51) du corps (5) et comporte deux branches sensiblement parallèles entre elles déterminant entre elles une première fente comportant du côté de l'extrémité libre desdites deux branches une section plus large, et une deuxième fente transversale sensiblement perpendiculaire respectivement à la première fente, débouchant avantageusement de part et d'autre du moyen de fixation.

5. Télémanipulateur (1) selon la revendication 4 **caractérisé en ce que** les deuxièmes fentes (514) et sections (513) des moyens de fixation (51) respectifs des corps (5) et coulisseau (6) de l'outillage (4) sont de préférence identiques.

6. Télémanipulateur (1) selon la revendication 5 **caractérisé en ce que** les deuxièmes fentes (514) et sections (513) des moyens de fixation (51) respectifs des corps (5) et coulisseau (6) de l'outillage (4) sont identiques aux deuxièmes fentes (165,175) et sections (164,174) respectives des manchons (16,17).

7. Télémanipulateur (1) selon l'une quelconque des revendications 2 à 6 **caractérisé en ce que** le câble (2) est muni à chacune de ses extrémités d'un embout (21) comprenant un corps (22) de forme cylindrique et d'une collerette (23) disposée autour dudit corps (22) et s'étendant perpendiculairement à l'axe longitudinal du corps (22).

8. Télémanipulateur (1) selon l'une quelconque des revendications 2 à 7 **caractérisé en ce que** la gaine (3) est munie à chacune de ses extrémités d'un embout (31), comprenant un corps (32) tubulaire de forme cylindrique et d'une collerette (33) disposée autour dudit corps (32) et s'étendant perpendiculairement à l'axe longitudinal du corps (32).

9. Télémanipulateur (1) selon l'une quelconque des revendications 1 à 8 **caractérisé en ce que** chaque manchon (16,17) est encliqueté sur le bras (11,12) associé et comporte au moins une languette (166,176) élastiquement déformable apte à coopérer avec un ergot du bras (11,12) associé.

10. Télémanipulateur (1) selon l'une quelconque des revendications 1 à 9 **caractérisé en ce que** les éléments métalliques constitutifs du télémanipulateur (1) sont découpés dans du feuillard, puis pliés ou emboutis.

## Patentansprüche

1. Remote-Manipulator (1) eines Werkzeugs (4), das einen Körper (5) umfasst, der mit einer stationären Backe (7) und einer Gleitführung (6), die mit einer beweglichen Backe (9) versehen ist, die sich linear in Bezug zu dem Körper (5) bewegen kann, versehen ist, wobei der Remote-Manipulator (1) Betätigungsmittel umfasst, die entfernt liegen und mit dem Werkzeug (4) über ein Kabel (2) gekoppelt sind, das auf einer Seite fest mit einem Befestigungsmittel der Gleitführung (6) verbunden ist und im Inneren einer biegsamen Hülse (3) gleitet, von der ein Ende fest mit einem Befestigungsmittel (51) des Körpers (5) derart verbunden ist, dass man das Kabel (2) gleiten lässt, wobei die Betätigungsmittel zwei Arme (11, 12) umfassen, die jeweils mit einem Stiel (14, 15) assoziiert und fähig sind, sich winkelig voneinander durch Drehung um eine Achse (13) um einen Wert derart abzuspreizen, dass die Entfernung zwischen ihrem freien Ende mindestens gleich der maximalen linearen Bewegung der Gleitführung (6), die die bewegliche Backe (9) trägt, ist, wenn man die zwei Stiele (14, 15) einander nähert, **dadurch gekennzeichnet, dass** jeder der Arme (11, 12) an seinem freien Ende austauschbar jeweils eine Muffe (16, 17) aufnimmt, die das Clipsen gleichermaßen des anderen Endes des Kabels (2) oder des anderen Endes der Hülse (3) erlaubt, wobei die Hülse (3) derart geclipst ist, dass sie das Kabel (2) gleiten lässt.

2. Remote-Manipulator (1) nach Anspruch 1, **dadurch gekennzeichnet, dass** jede Muffe (16, 17) zwei Schenkel (162, 172) umfasst, die elastisch verformbar, im Wesentlichen zueinander parallel sind und zwischen einander einen ersten Schlitz (163, 173) festlegen, der auf der Seite des freien Endes der zwei Schenkel (162, 172) einen breiteren Abschnitt (164, 174) umfasst, und einen zweiten Querschlitz (165, 175) im Wesentlichen senkrecht zu dem ersten Schlitz (163, 173), der vorteilhafterweise zu beiden Seiten der Muffe (16, 17) mündet, wobei die ersten Schlitze (163, 173) derart sind, dass ihre mittlere Längsebene zu der Rotationsachse (13) der Arme (11, 12) im Wesentlichen senkrecht ist.

3. Remote-Manipulator (1) nach Anspruch 2, **dadurch gekennzeichnet, dass** das Befestigungsmittel (51) des Körpers (5) den Muffen (16, 17) ähnelt und zwei im Wesentlichen zueinander parallele Schenkel (511) umfasst, die zwischen einander einen ersten Schlitz (512) festlegen, der auf der Seite des freien Endes der zwei Schenkel (511) einen breiteren Abschnitt (513) umfasst, und einen zweiten Querschlitz (514) im Wesentlichen jeweils senkrecht zu dem ersten Schlitz (512), der vorteilhafterweise zu beiden Seiten des Befestigungsmittels (51) mündet.

4. Remote-Manipulator (1) nach Anspruch 3, **dadurch gekennzeichnet, dass** das Befestigungsmittel der Gleitführung (6) dem Befestigungsmittel (51) des Körpers (5) ähnelt und zwei im Wesentlichen zueinander parallele Schenkel umfasst, die zwischen einander einen ersten Schlitz festlegen, der auf der Seite des freien Endes der zwei Schenkel einen breiteren Abschnitt umfasst, und einen zweiten Querschlitz im Wesentlichen senkrecht jeweils zu dem ersten Schlitz, der vorteilhafterweise zu beiden Seiten des Befestigungsmittels mündet.

5. Remote-Manipulator (1) nach Anspruch 4, **dadurch gekennzeichnet, dass** die zweiten Schlitze (514) und Abschnitte (513) der Befestigungsmittel (51) jeweils des Körpers (5) und der Gleitführung (6) des Werkzeugs (4) vorzugsweise identisch sind.

6. Remote-Manipulator (1) nach Anspruch 5, **dadurch gekennzeichnet, dass** die zweiten Schlitze (514) und Abschnitte (513) der Befestigungsmittel (51) jeweils des Körpers (5) und der Gleitführung (6) des Werkzeugs (4) mit den jeweiligen zweiten Schlitzen (165, 175) und Abschnitten (164, 174) der Muffen (16, 17) identisch sind.

7. Remote-Manipulator (1) nach einem der Ansprüche 2 bis 6, **dadurch gekennzeichnet, dass** das Kabel (2) an jedem seiner Enden mit einem Ansatz (21) versehen ist, der einen Körper (22) mit zylindrischer Form und einen Kragen (23), der um den Körper (22) angeordnet ist und sich senkrecht zu der Längsachse des Körpers (22) erstreckt, umfasst.

8. Remote-Manipulator (1) nach einem der Ansprüche 2 bis 7, **dadurch gekennzeichnet, dass** die Hülse (3) an jedem ihrer Enden mit einem Ansatz (31) versehen ist, der einen röhrenförmigen Körper (32) mit zylindrischer Form und einen Kragen (33), der um den Körper (32) angeordnet ist und sich senkrecht zu der Längsachse des Körpers (32) erstreckt, umfasst.

9. Remote-Manipulator (1) nach einem der Ansprüche 1 bis 8, **dadurch gekennzeichnet, dass** jeder Stutzen (16, 17) auf dem dazugehörenden Arm (11, 12) eingerastet ist und mindestens eine elastisch verformbare Lasche (166, 176) umfasst, die geeignet ist, um mit einem Dorn des dazugehörenden Arms (11, 12) zusammenzuwirken.

10. Remote-Manipulator (1) nach einem der Ansprüche 1 bis 9, **dadurch gekennzeichnet, dass** die metallischen Elemente, die den Remote-Manipulator (1) bilden, aus einem Bandstahl ausgeschnitten, dann gefaltet oder gestanzt sind.

## Claims

1. Remote manipulator (1) for a tool (4) comprising a body (5) provided with a fixed jaw (7) and a slide (6) provided with a mobile jaw (9) able to be displaced linearly in relation to the body (5), said remote manipulator (1) comprising means of actuating located at a distance and coupled to said tools (4) by the intermediary of a cable (2) integral with a side of a means for the fastening of the slide (6) and sliding inside a flexible sheath (3) of which one end is integral with a means for fastening (51) of the body (5) in such a way as to allow the cable (2) to slide, with the means of actuating comprising two arms (11, 12) each associated respectively to a handle (14, 15) and able to be separated angularly from each other by rotation about an axis (13) by a value such that the distance between the free end thereof is at least equal to the maximum linear displacement of the slide (6) bearing the mobile jaw (9), when said two handles (14, 15) are brought close to one another, **characterized in that** each of the arms (11, 12) receives at the free end interchangeably respectively a sleeve (16, 17) allowing for the clipping indifferently of the other end of the cable (2) or of the other end of the sheath (3), with the sheath (3) clipped in such a way as to allow the cable (2) to slide.

2. Remote manipulator (1) according to claim 1 **characterized in that** each sleeve (16, 17) comprises two elastically deformable branches (162, 172), substantially parallel to each other and determining between them a first slot (163, 173) comprising on the side of the free end of said two branches (162, 172) a wider section (164, 174), and a second transverse slot (165, 175) substantially perpendicular to said first slot (163, 173), opening advantageously on either side of the sleeve (16, 17), with the first slots (163, 173) being such that the median longitudinal plane thereof is substantially perpendicular to the axis (13) of rotation of said arms (11, 12).

3. Remote manipulator (1) according to claim 2 **characterized in that** the means for fastening (51) of the body (5) is similar to the sleeves (16, 17) and comprises two branches (511) substantially parallel to each other determining between them a first slot (512) comprising on the side of the free end of said two branches (511) a wider section (513), and a transverse second slot (514) substantially perpendicular respectively to the first slot (512), opening advantageously on either side of the means for fastening (51).

4. Remote manipulator (1) according to claim 3 **characterized in that** the means for fastening of the slide (6) is similar to the means for fastening (51) of the body (5) and comprises two branches substantially parallel to each other determining between them a first slot comprising on the side of the free end of said two branches a wider section, and a second transverse slot substantially perpendicular respectively to the first slot, opening advantageously on either side of the means for fastening.

5. Remote manipulator (1) according to claim 4 **characterized in that** the second slot (514) and sections (513) of the respective means for fastening (51) of the bodies (5) and slide (6) of the tool (4) are more preferably identical.

6. Remote manipulator (1) according to claim 5 **characterized in that** the second slot (514) and sections (513) of the respective means for fastening (51) of the bodies (5) and slide (6) of the tool (4) are identical to the second slot (165, 175) and respective sections (164, 174) of the sleeves (16, 17).

7. Remote manipulator (1) according to any of claims 2 to 6 **characterized in that** the cable (2) is provided at each of the ends thereof with a tip (21) comprising a body (22) of cylindrical shape and a flange (23) arranged around said body (22) and extending perpendicularly to the longitudinal axis of the body (22).

8. Remote manipulator (1) according to any of claims 2 to 7 **characterized in that** the sheath (3) is provided at each of the ends thereof with a tip (31), comprising a tubular body (32) of cylindrical shape and with a flange (33) arranged around said body (32) and extending perpendicularly to the longitudinal axis of the body (32).

9. Remote manipulator (1) according to any of claims 1 to 8 **characterized in that** each sleeve (16, 17) is snap-fitted on the associated arm (11, 12) and comprises at least one elastically deformable tab (166, 176) able to cooperate with a lug of the associated arm (11, 12).

10. Remote manipulator (1) according to any of claims 1 to 9 **characterized in that** the metal elements comprising the remote manipulator (1) are cut in the metal strip, then folded or stamped.
